# EUROPEAN PATENT SPECIFICATION

(11) **EP 1 400 141 B1**
(45) Date of publication and mention of the grant of the patent: **10.03.2010**
(21) Application number: 02741902.7
(22) Date of filing: 07.06.2002
(51) Int. Cl.: H04W 88/08

(54) **NETWORK AND METHOD FOR CONNECTING ANTENNAS TO BASE STATIONS IN A WIRELESS COMMUNICATION NETWORK USING SPACE DIVERSITY**
NETZWERK UND VERFAHREN ZUR VERBINDUNG VON ANTENNEN MIT BASISSTATIONEN IN EINEM RAUMDIVERSITY VERWENDENDEN DRAHTLOSEN KOMMUNIKATIONSSYSTEM
RESEAU ET PROCEDE PERMETTANT DE RELIER DES ANTENNES A DES STATIONS DE BASE DANS UN RESEAU DE COMMUNICATION SANS FIL EN FAISANT APPEL A LA DIVERSITE D'ESPACE

(30) Priority: 08.06.2001 US 296781 P; 17.08.2001 US 313360 P; 05.11.2001 US 12208; 05.11.2001 US 12246; 05.11.2001 US 12264; 04.04.2002 US 117433
(43) Date of publication of application: 24.03.2004
(73) Proprietor: Nextg Networks, San Jose, CA 95110 (US)
(72) Inventor: MANI, Sanjay, Palo Alto, CA 94303 (US); CUTRER, David, Fremont, CA 94555 (US)
(74) Representative: Harris, Ian Richard
(86) International application number: PCT/US2002/018092
(87) International publication number: WO 2002/102102

(56) References cited:
- EP-A- 0 476 569
- US-A- 5 339 184
- US-A- 5 657 374
- US-A- 5 918 154
- US-A- 6 070 090
- US-B1- 6 192 038

## Description

### BACKGROUND OF THE INVENTION

### Field of the Invention

This invention relates generally to cellular mobile telecommunication systems, and more particularly to shared networks to distribute base station antenna points and the associated base station transceiver hardware.

### Description of Related Art

Cellular networks are typically deployed by co-locating antennas and base stations at sites that are either bought or leased and can support such installations.

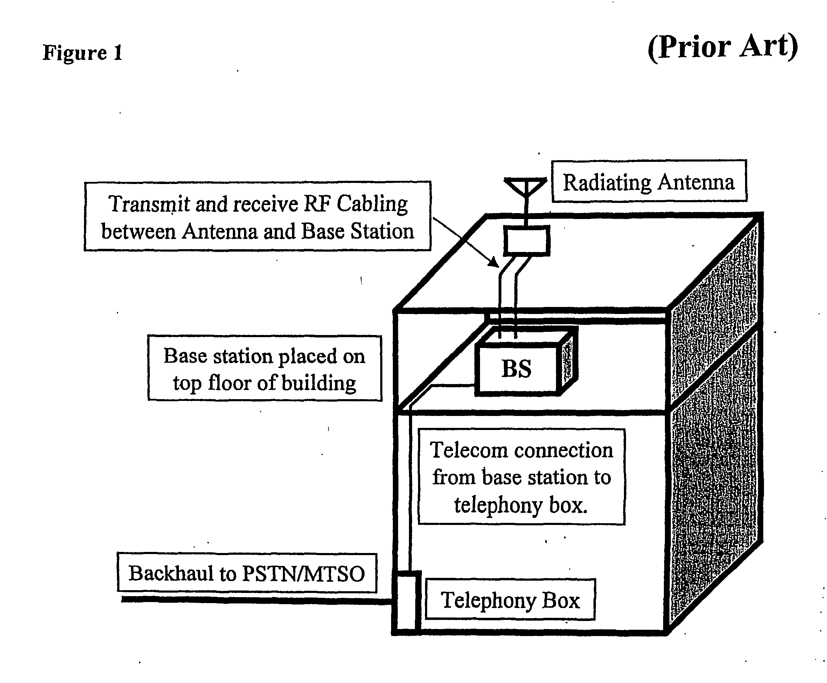

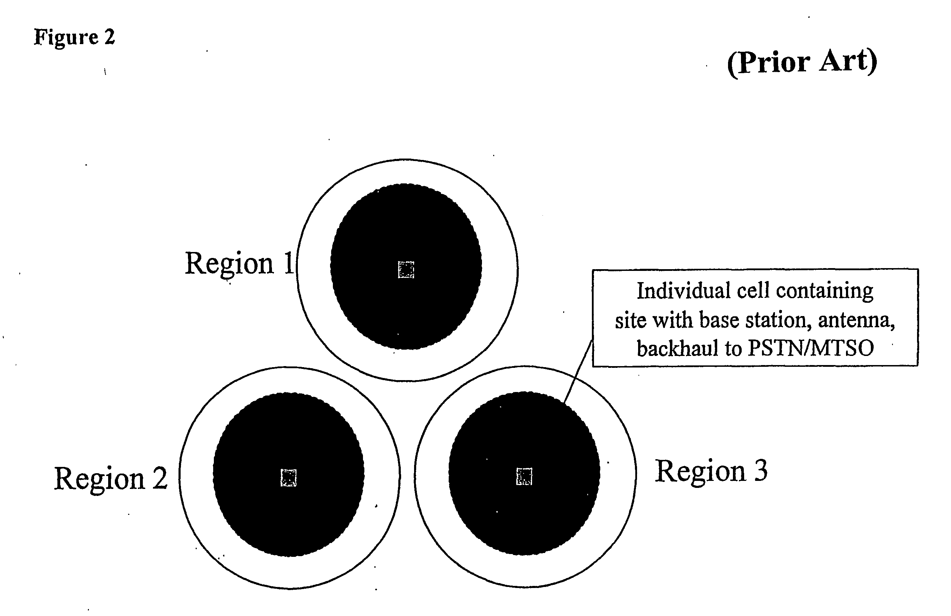

Figure 1 illustrates a typical rooftop cellular site, while Figure 2 depicts a typical deployment architecture. The antenna is located close to the base station, generally within 100 feet, and connected to the base station employing lossy RF cable.

An alternate architecture can be employed in which the base station is placed at a central or accessible location, and then remote antennas are connected to the base station using optics or RF cable. Such an architecture is employed where the topology or mobile traffic patterns are appropriate, such as in buildings or on roads. In an in-building application, a base station can be placed in a room, and then the entire building is covered with small antennas, connected to the base station over a cable and/or optical network.

Another application covers outdoor narrow canyons or roads through lightly populated areas. In these areas, it is difficult to site a base station at the desired coverage location. In addition, the geometry of the location may not be reasonable to cover with a conventional base station. A canyon may be a long narrow area with a few cars in it at any given time, in which placing many base stations along the canyon would waste a large amount of capacity. The solution to this problem is to employ a distributed antenna network to cover the canyon, and then connect that network to a base station placed at a location where it is relatively easy to site. This network can employ a point-to-point repeater link, in which the near end is connected to the base station and the far end is connected to the antennas. The link carries uplink and downlink signals from one or a group of antennas to a base station on a proprietary link.

The links can be optical fiber or some form of RF cabling, and generally include amplification so that the distance is covered with no loss in signal intensity, even if the signal properties are degraded by the link. A power amplifier placed at the remote location is used to amplify the downlink signal, while a low-noise amplifier at the remote location is used in the uplink direction, also to amplify the signal. The repeater architecture allows coverage to be cost-effectively extended to areas that are difficult to site multiple base stations for either financial or physical reasons.

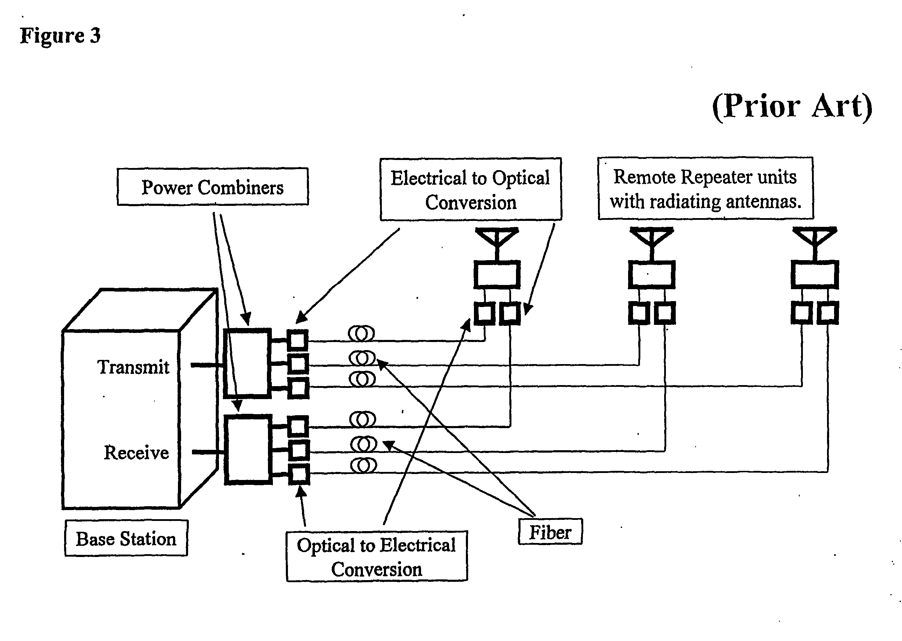

A common implementation to extend coverage is to use a base station and several optical fiber links with remote antenna locations. When the goal is coverage, often multiple fiber links are used on a single base station in order to distribute the signals from the base station over multiple antennas. Such an implementation is illustrated in Figure 3. Three repeaters are connected to one base station, employing power combiners/dividers to split the signal between the multiple repeaters. The remote repeaters are linked optically to the base station unit. On the downlink, the base station transmit signal will be split to cover the various repeaters, and on the uplink the signal from these multiple repeater receivers can be power combined and connected to a base station receive port. That means that the base station is distributing its transmit signal to multiple transmitters on the downlink and receiving power combined signals from multiple receivers on the uplink. This configuration allows one base station to cover a large area that isn't readily covered by a conventional base station through a distributed network.

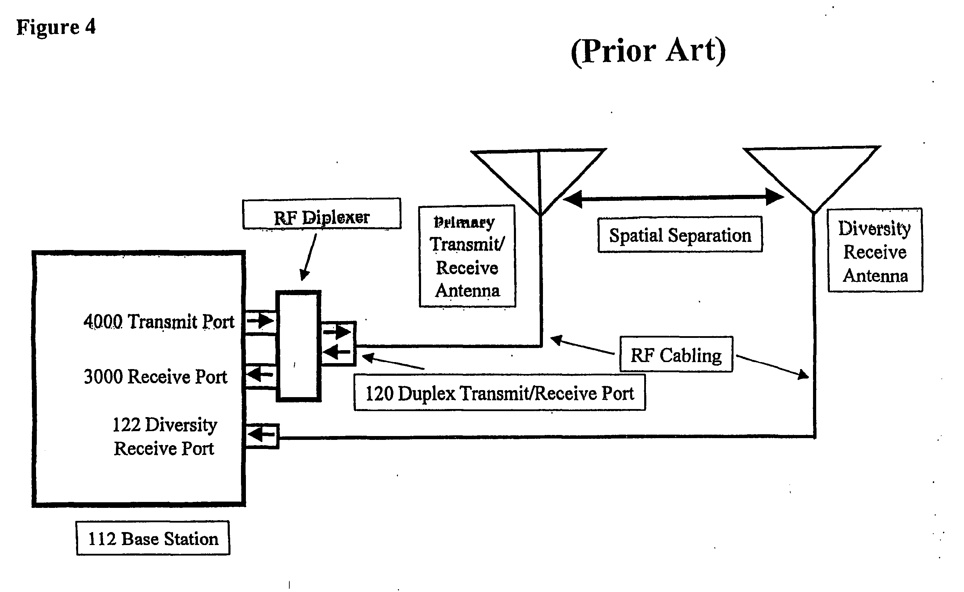

In addition to the single RXreceive port or TX/RX duplex transmit/receive port, many base stations possess an additional diversity receive port. In a conventional base station, this additional port would be connected to a different receive antenna, as illustrated in Figure 4. The diversity receive port allows for two spatially diverse receive antennas to be used, and they are typically separated by at least (receive wavelength)/2. Diversity receive reduces the likelihood of Raleigh fading hurting uplink reception. In Raleigh fading, multiple signal paths from the mobile transmitter to the BTS antenna cause dramatic oscillations in the received signal intensity from multipath signal addition. If Raleigh fading creates a dramatic signal reduction at one RX antenna, it is unlikely to create a deep fade at the spatially separated RX antenna at the same time. Hence, spatial receive diversity combats against Raleigh fades. These deep fades are a significant problem in cellular uplink reception. The two receive ports can have separate demodulation receive paths, in which case two demodulated signals can be generated and combined. This can result in up to a 3dB increase in SNR, in addition to the greater immunity to Raleigh fade. Receive diversity can also be implemented in a simpler fashion, by merely choosing the larger signal, in which case the SNR increase is not realized. The diversity concept can be extended to more branches than 2, for greater immunity to fading.

There is a need for a distributed network combined with a base station with reduced and/or minimal Raleigh fade. There is a further need for a distributed network which passes to a base station an improved uplink signal. There is yet another need for distributed network that has a decrease in the uplink noise floor.

US 5,657,374 describes a method of communicating a plurality of two-way inbound/outbound cellular telephone transmissions between a base station and a physically remote cell using a set of channels. At the base station, a plurality of outbound telephone transmissions, received from a network, are analog modulated onto respective ones of RF analog outbound channel carriers. The modulated analog channel carriers are combined to form a single RF analog outbound signal representing all of the outbound telephone transmissions in the set of channels. The analog outbound combined signal is subsequently digitized into a single stream of outbound digital samples and transmitted to the remote cell. At the remote cell, the stream of digital samples is converted back to the RF analog outbound combined signal and broadcasted directly to mobile units in the cell. Further, the remote cell receives a plurality of simultaneous inbound telephone transmissions from the mobile units as an RF analog inbound combined signal. The analog inbound combined signal is digitized into a single stream of inbound digital samples and transmitted to the base station. At the base station, the stream of inbound digital samples is converted into a single RF analog inbound signal, the inbound telephone transmissions are recovered from the single RF analog inbound signal, and delivered to the network.

US 6,070,090 describes a system and method for providing independent sector mapping of signals associated with a first and second service utilizing a same multibeam antenna system is disclosed. In a preferred embodiment switch matrixes associated with each service are manipulated to selectably map sector patterns of each service. Additionally, to mitigate destructive cancellation caused by combining signals of multiple antenna beams having a signal associated with a particular sector, adjustable phase shifters and/or-attenuators are provided in the signal paths.

US 6,192,038 describes a communication system having a plurality of forward channel communications and a plurality of corresponding reverse channel communications from and to a plurality of mobile users. A plurality of collectors are distributed at macro-diverse locations for receiving reverse channel signals from the users. Each of the collectors includes microdiversity receivers for receiving the reverse channel signals from users. The collectors process and forward the reverse channel signals to aggregators. The aggregators combine the reverse channel signals to yield a combined signal with fewer bit errors than occur in the absence of combining.

US 5,918,154 describes a CDMA telephone system in which an RF repeater is connected through a CATV plant and a RASP to a base station and exchanges radio signals with a mobile handset. The base station includes a RAKE receiver and the RF repeater employs a pair of receive signal paths and a pair of transmit signal paths, each with a delay line in one, to provide transmit and receive antenna diversity without doubling the band with the CATV plant.

### SUMMARY OF THE INVENTION

Accordingly, an aim of the present invention is to provide a distributed network that connects base stations to remote antennas, and its methods of use, that has a plurality of links with at least a portion providing multiple transmission paths.

Another aim of the present invention is to provide a distributed optical network connecting base stations to remote antennas, and its methods of use, that has a plurality of links with at least one link providing multiple transmission paths by employing multiple optical wavelength multiplexing.

Yet another aim of the present invention is to provide a distributed network connecting base stations to remote antennas, and its methods of use, that has a plurality of links with cellular signals that are exchanged over the network and are represented digitally.

Another aim of the present invention is to provide a distributed optical network connecting base stations to remote antennas, and its methods of use, that has a plurality of links with at least one link providing multiple transmission paths by employing multiple optical fiber strands.

A further aim of the present invention is to provide a distributed network connecting base stations to remote antennas, and its methods of use, where at least one base station or antenna location is geographically remote from the network and is connected to the network with a free space link.

Another aim of the present invention is to provide a distributed network, and its methods of use, that connects base stations-to remote antennas, and has a plurality of transmission paths that are shared between different cellular operators.

Another aim of the present invention is to provide a distributed network, and its methods of use, that connects base stations to remote antennas, and has base stations co-located at a centralized location, and remote antennas distributed over a geographic area to provide cellular coverage.

An aim of the present invention is to provide a distributed antenna system, and its methods of use, that utilizes diversity receive.

Another aim of the present invention is to provide a distributed antenna system, and its methods of use, that has an improvement in the uplink signal.

A further aim of the present invention is to provide a distributed antenna system, and its methods of use, that has a decrease in uplink noise floor.

Yet another aim of the present invention is to provide a distributed antenna system, and its methods of use, that has multiple remote repeater units and their corresponding antennas divided into first and second groups, with each unit in both groups connected to one downlink signal, and the units in the first group coupled to a first receive or transmit/receive port, and the units in the second group coupled to a second diversity receive port.

Aspects of the present-invention are set forth-in-the-appended claims.

An embodiment provides a network that has a plurality of antennas RF or optically coupled over the network to a plurality of base stations. The base stations are configured to provide cellular transmission. At least a portion of the plurality of base stations are in a common location and at least a portion of the antennas are geographically disbursed. A plurality of links couple the plurality of antennas and the plurality of base stations. At least one link provides multiple transmission paths between at least a portion of the base stations with at least a portion of the antennas.

In another embodiment of the present invention, a network includes a plurality of antennas optically or RF coupled over the network to a plurality of base stations. The base stations are configured to provide cellular transmission. A plurality of links couple the plurality of antennas and the plurality of base stations. At least one link provides multiple transmission paths between at least a portion of the base stations with at least a portion of the antennas. At least one link is shared by at least two operators on different transmission paths.

In another embodiment of the present invention, a network includes a plurality of antennas coupled over the network to a plurality of base stations. The base stations are configured to provide transmissions which represent cellular signals. A plurality of links couple the plurality of antennas and the plurality of base stations. At least one link provides multiple transmission paths between at least a portion of the base stations with at least a portion of the antennas. At least a portion of the plurality of base stations and antennas belong to different operators.

In another embodiment of the present invention, a network includes a plurality of antennas optically coupled over the network to a plurality of base stations. The base stations are configured to provide cellular transmission. A plurality of optical fiber links couple the plurality of antennas and the plurality of base stations. At least one link provides multiple transmission paths over at least two optical wavelengths between at least a portion of the base stations with at least a portion of the antennas. Different operators employ different optical wavelengths.

In another embodiment of the present invention, A network includes a plurality of antennas optically coupled over the network to a plurality of base stations. The base stations are configured to provide cellular transmission. A plurality of optical fiber links couple the plurality of antennas and the plurality of base stations. At least one link provides multiple transmission paths between at least a portion of the base stations with at least a portion of the antennas. The plurality of links include at least one fiber cable with a plurality of fiber strands which form multiple transmission paths. At least one link is shared by at least two operators.

In another embodiment of the present invention, a network includes a plurality of antennas optically or RF coupled over the network to a plurality of base stations. The antennas and base stations are configured to transmit and receive digital signals representing cellular signals. The digital signals are exchanged over the network. A plurality of links couple the plurality of antennas and the plurality of base stations. At least one link provides multiple transmission paths between at least a portion of the base stations with at least a portion of the antennas.

In another embodiment of the present invention, a network includes a plurality of remote units and a plurality of base units. Each remote unit is a radiating unit that has at least a portion of the functionality of a base station. A plurality of links couple the plurality of remote units and the plurality of base units. At least one link provides multiple transmission paths between at least a portion of the base units with at least a portion of the plurality of remote units.

In another embodiment of the present invention, a network includes a plurality of antennas optically coupled over the network to a plurality of base stations. The base stations are configured to provide cellular transmission. A plurality of links couple the plurality of antennas and the plurality of base stations. At least one link provides multiple transmission paths between at least a portion of the base stations with at least a portion of the antennas. At least a portion of the plurality of links are fixed optical paths. Each fixed optical path is a stationary optical link between one or more base stations and one or more antennas that is rerouted on a time scale much slower than that of the bit rate over the link, and connects nodes to one another as a virtual circuit.

In another embodiment of the present invention, a method of transmission provides a network that includes a plurality of optical links that couple a plurality of antennas with a plurality of base stations. Multiple transmission paths are provided with at least one link using optical DWDM between at least a portion of the base stations with at least a portion of the antennas. Signals are digitally encoded over the multiple transmission paths.

In another embodiment of the present invention, a method of transmission provides a network with a plurality of links that couple a plurality of antennas with a plurality of base stations. Multiple transmission paths are provided between at least a portion of the base stations with at least a portion of the antennas. Signals are digitally encoded over the multiple transmission paths.

In another embodiment of the present invention, a network includes a plurality of antennas optically coupled over the network to a plurality of base stations. The base stations are configured to provide cellular transmission. A plurality of free space optical links couple the plurality of antennas and the plurality of base stations. At least one link provides multiple transmission paths over at least two optical wavelengths between at least a portion of the base stations with at least a portion of the antennas.

In another embodiment of the present invention, a method of transmission provides a network with a plurality of optical links that couple a plurality of antennas with a plurality of base stations. Multiple transmission paths are provided with at least one link of the plurality of links using optical DWDM between at least a portion of the base stations with at least a portion of the antennas. The DWDM wavelength carriers carry an analog signal representative of an RF signal between the plurality of base stations and the plurality of antennas.

In another embodiment of the present invention, a method of transmission provides a network with a plurality of links that couple a plurality of antennas with a plurality of base stations. At least one base station or antenna location is geographically remote from the network and connected to the network with a free space link. Multiple transmission paths are provided between at least a portion of the base stations with at least a portion of the antennas.

In another embodiment of the present invention, a network includes a plurality of antennas remotely located from and coupled to a base station having a plurality of receive or transmit/receive ports. The plurality of antennas are split into a plurality of groups that is equal in number to a number of the plurality of receive ports. The uplink signals from each grouping of the plurality of antennas are connected to one of the plurality of receive ports of the base stations by signal combination. A plurality of links optically or electrically couple the plurality of remotely located antennas and the plurality of base stations.

In another embodiment of the present invention, a network includes a plurality of antennas coupled by optical links to a least one RF signal combiner on the uplink to produce a single RF combined signal. The RF combined signal is coupled to a base station that has a plurality of receive or transmit/receive ports. The plurality of antennas are split into a plurality of groups that is equal in number to a number of the plurality of receive or transmit/receive ports. Each grouping of the plurality of antennas is connected to one of the plurality of receive or transmit/receive ports of the base stations by signal combination. A plurality of links couple the plurality of antennas and the plurality of base stations.

In another embodiment of the present invention, a network includes a plurality of antennas optically coupled to a base station that has a plurality of receive or transmit/receive ports. The plurality of antennas are split into a plurality of groups that is equal in number to a number of the plurality of receive or transmit/receive ports. The uplink signals from each grouping of the plurality of antennas are connected to one of the plurality of receive or transmit/receive ports of the base stations by signal combination. A plurality of links couple the plurality of antennas and the plurality of base stations. A coverage area is generated by a downlink signal that is smaller than a coverage area generate by an uplink signal. The coverage area is arranged such that remote nodes connected to different receive ports have larger overlapping uplink coverage areas than overlapping downlink coverage areas.

In another embodiment of the present invention, a network includes a plurality of remote repeater units and their corresponding antennas that are remotely located from and coupled to a base station that has a plurality of receive or transmit/receive ports. The plurality of remote repeater units and their corresponding antennas are split into a plurality of groups that is equal in number to a number of the plurality of receive ports. The uplink signals from each grouping of the plurality of remote repeater units are connected to one of the plurality of receive ports of the base stations by signal combination. A plurality of links couple the plurality of remotely located remote repeater units and their corresponding antennas and the plurality of base stations.

### BRIEF DESCRIPTION OF THE DRAWING

Figure 1 illustrates a prior art cellular site with a set of antennas on a rooftop and connected over a short RF cable to a base station radio/transceiver unit that is then backhauled to the cellular network.
Figure 2 is a schematic diagram of a prior art deployment of cellular network with base station/antenna sites located at strategic points across a geographic area to provide coverage, and each site is backhauled to the cellular network via 1 or more T-1 digital links.
Figure 3 is a schematic diagram of a prior art distributed repeater architecture that includes three remote repeaters optically connected to a base station over a one or more fiber links.
Figure 4 is a schematic diagram of a prior art base station with diversity receive, with the transmit and receive ports of the base station combined with a diplexer and then connected to a primary antenna, and a second antenna is used for diversity reception.
Figure 5 is a schematic diagram of one embodiment of a distributed base station network with a plurality of antennas and base stations that has multiple transmission paths between at least a portion of the base stations with at least a portion of the antennas
Figure 6 is a schematic diagram of a MEMs switch and Add/Drop Multiplexer that can be used with the Figure 1 network.
Figure 7 is a schematic diagram of a SONET router that can be used with the Figure 1 network.
Figure 8 is a schematic diagram of an optical multiplex/demultiplexer that can be used with the Figure 1 network.
Figure 9 is a schematic diagram of a DWDM transmission embodiment of the Figure 1 network.
Figure 10 is a schematic diagram of a point-to-point TDM topology embodiment of the Figure 1 network.
Figure 11 is a schematic diagram of one fiber cable 20 with a plurality of fiber strands which from the multiple transmission paths of the Figure 1 network.
Figure 12 is a schematic diagram of a Figure 5 network that uses free space optical links.
Figure 13 is a schematic diagram of a Figure 5 network where at least a portion of the links are configured to provide a selectable allocation of capacity to at least some of the base stations.
Figure 14 is a schematic diagram of a Figure 5 network with multiple base station sites connected together.
Figure 15 is a schematic diagram of a Figure 5 network that includes a control box for at least a portion of the antennas in order to provide routing to selected base stations.
Figure 16 is a schematic diagram of a Figure 5 network with amplifiers included in the links.
Figure 17 is a schematic diagram of a Figure 5 network that includes a digital transceiver embedded between a base station and the network on a base station side, and a digital transceiver embedded between an antenna and the network at an antenna side.
Figure 18 is a schematic diagram of a Figure 5 network illustrating transmission of down link and up link signals.
Figure 19 is a schematic diagram of a hub and spoke embodiment of the Figure 5 network.
Figure 20 is a schematic diagram of a Figure 5 network with at least two base stations located in a common location and the antennas geographically dispersed.
Figure 21 is a schematic diagram of a Figure 5 network with base stations connected together for different operators and used to extend coverage from each operator to other operators.
Figure 22 is a schematic diagram of a Figure 5 network that directly connects to an MTSO.
Figure 23 is a schematic diagram of one embodiment of the present invention with remote repeater units and their corresponding antennas placed on/near poles on a road and are connected to a single base station and divided into 2 alternating groups, with group being connected to a different receive port.
Figure 24 is a schematic diagram is a schematic diagram of another embodiment of remote repeater units and their corresponding antennas placed on/near poles on a road and are connected to a single base station and divided into 2 alternating groups, with group being connected to a different receive port.
Figure 25 is a schematic diagram that illustrates the improvement in signal-to-noise of the Figure 23 and Figure 24 embodiments when diversity receive is employed in multiple antenna application.
Figure 26 is a schematic diagram that illustrates overlapping uplink diversity with differing uplink/downlink coverage areas.

### DETAILED DESCRIPTION

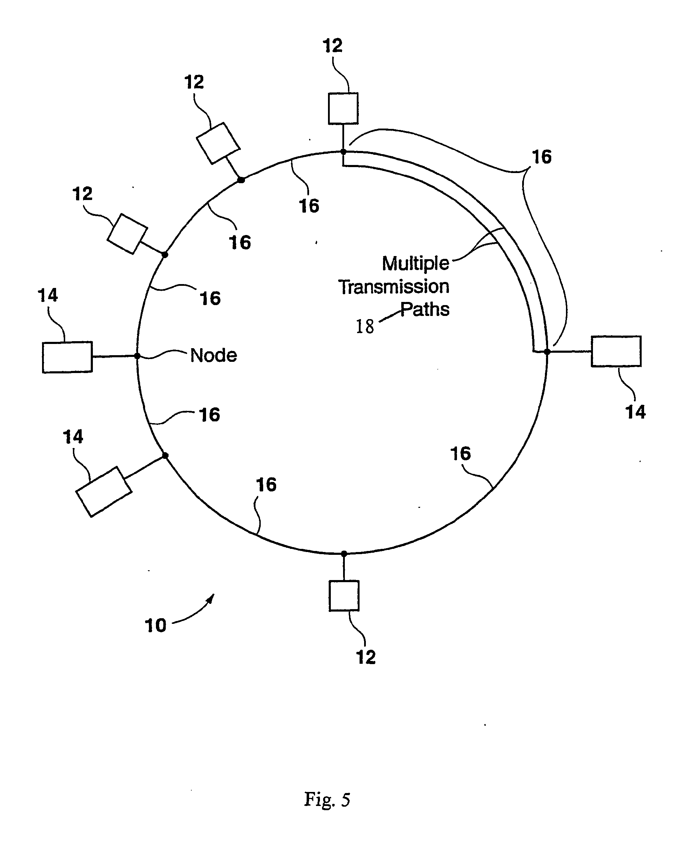

Referring to Figure 5, one embodiment of the present invention is a network 10 that includes a plurality of antennas 12 that are optically coupled over network 10 to a plurality of base stations 14. Base stations 14 are configured to provide wireless cellular transmission. A plurality of links 16 couple the plurality of antennas 12 and the plurality of base stations 14. At least one link 18 of the plurality of links 16 provides multiple transmission paths between at least a portion of the plurality of base stations 14 with at least a portion of the plurality of antennas 12. In one embodiment, the plurality of antennas 12 and base stations 14 are coupled using RF links to form a network 10. By remotely locating the antenna 12 units from the base stations using such a network 10, numerous advantages are realized.

The plurality of links 16 can be configured to provide multiple transmission paths by frequency division multiplexing (FDM), time division multiplexing (TDM), and the like. Optically coupled networks can be configured to provide multiple transmission paths with wavelength division multiplexing (WDM) and/or multiple fiber strands that comprise a fiber cable. Both of these optical multiplexing techniques allow electrical isolation between different signals, because only the optical fiber and multiplexing components need be shared, not electrical components, optical transmitters, or optical receivers. TDM and FDM can both be combined with WDM to increase the number of transmission paths over a link. If the links 16 are RF microwave links, the multiple transmission paths can be different RF frequency channels.

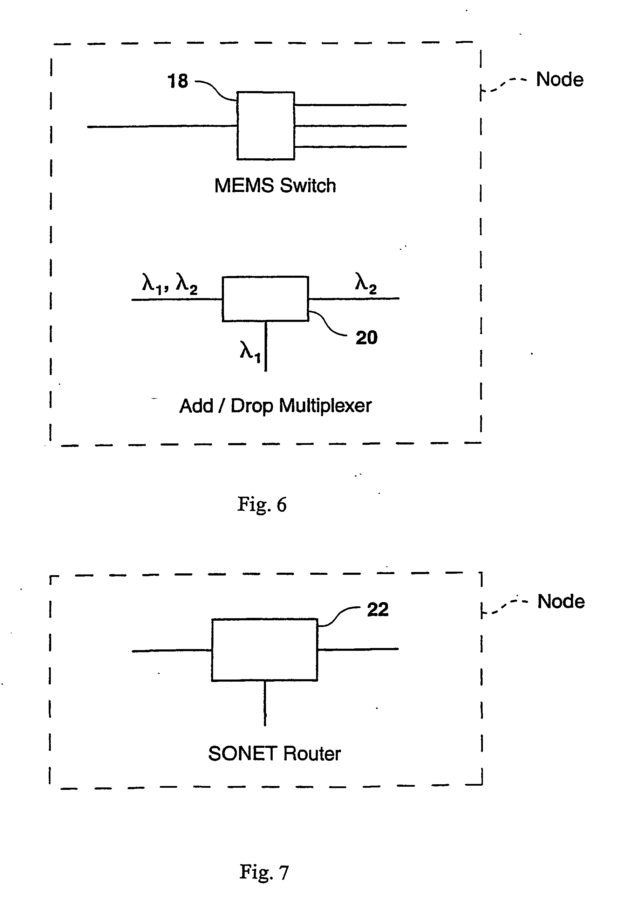

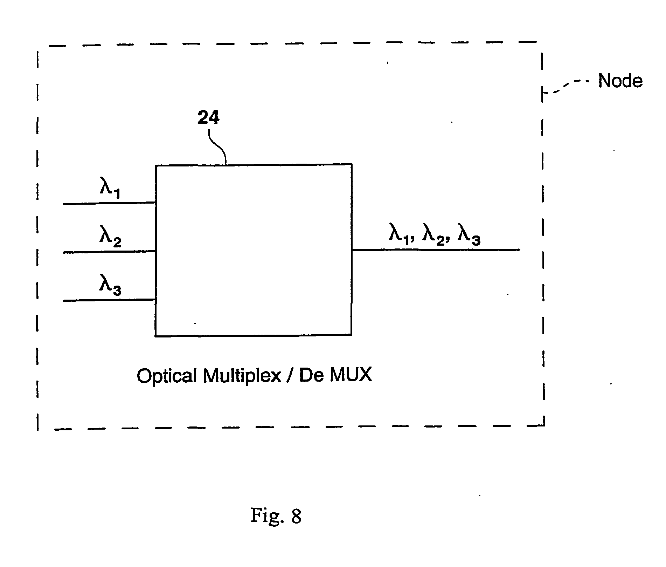

Optical WDM also allows multiplexing of different signals with very low latency, because no processing or switching operation need be performed, low latency optical directing components can be used exclusively. As illustrated in Figures 6, 7 and 8, optical multiplexing and routing can be performed with low latency passive or switching components including, but not limited to a MEMS switch 18, Add/Drop Multiplexer 20, Optical Multiplexer 24, and the like. Higher latency optical routing components such as a SONET router 22 can be used as well, if the latency budget is acceptable. FDM can also have low latency because RF mixing and combining are low latency operations, no processing or switching need be performed. Low latency is a desirable property for the invention, because placing a network between the antenna 12 and current base stations 14 places strict latency limitations on the network 10, as the network is now part of the conventional "air link" of a cellular system. This element of the link has strict latency constraints in modern cellular protocol standards, such as CDMA and GSM. However, other base station 14 embodiments can compensate for greater latency in this "air link" portion of the network 10, as it is a very small fraction of total latency in a wireless call. Such base stations permit much more flexible networking technology to be employed.

All or a portion of the links 16 can use optical Figure 6 DWDM (Dense Wavelength Division Multiplexing) for transmission. At least one link 16 can provide multiple transmission paths employing digital transmissions and DWDM multiplexing between at least a portion of the base stations 14 with at least a portion of the antennas 12. DWDM ring networks also can employ protection mechanisms, which can be important in the implementation of this invention, because if a fiber link breaks, multiple cellular sites will go down. Such protection operates by routing the optical signal in the opposite direction along the ring if there is a break. This routing can be accomplished by switching the direction of transmission around the ring on detection of a break, or by always transmitting optical signals between nodes in both directions, creating two paths for redundancy in case of a fiber break.

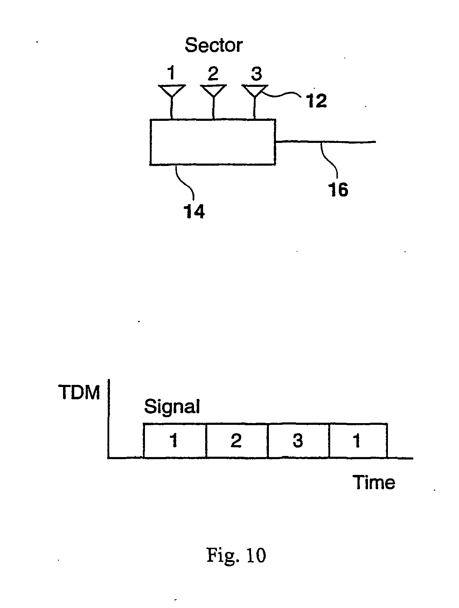

Some or all of the links 16 can use TDM (Time Division Multiplexing) to create the transmission paths. In one embodiment, the TDM employs SONET TDM techniques. In one embodiment, the TDM is specifically employed from one node to another node on the network 10 to carry multiple distinct RF signals in a point-to-point fashion. In a point-to-point TDM link, several signals are multiplexed together at an originating node, the multiplexed signal is then transported to the terminating node, and then the multiple signals are demultiplexed at the terminating node. Point-to-point TDM topology has the advantage of simplifying the multiplexing of multiple signals together, as opposed to adding and dropping low bit rate signals onto high bit rate carriers. Additionally, as illustrated in Figure 10, the TDM link can carry multiple sectors of a base station 14. Further, the TDM link can carry multiple signals from different operators, carry diversity signals and be used to carry backhaul signals.

All or a portion of the links 16 can employ the SONET protocol, particularly using fixed optical paths. In such an embodiment, the SONET protocol is used to encode the signals, and then they are directed along fixed optical paths in a multiple wavelength optical network 10. A fixed optical path is one that is re-routed infrequently compared to the bit rate of the communication protocol employed over the path. This has the advantage of simplifying routing, since now only wavelengths need be routed. In a more flexible network 10, more complex SONET routing can be employed, for example, the links 16 can be multiplexed onto a SONET ring. In such a routing scheme, the multiplexing involves routing bits at the carrier bit rate of the ring, rather than routing optical wavelengths.

Different optical wavelengths in a fixed or switched optical path configuration can also employ other protocols. In one embodiment, at least a portion of the links 16 employ Fibre Channel, Gigabit Ethernet, TCP, ATM or another transmission protocol. In one embodiment, at least one optical wavelength carries OA&M signals and in another embodiment, at least one TDM channel carries OA&M signals.

Full SONET routing can be used over the network 10. In such a case, low bit rate cellular signals are added and dropped off of higher bit rate SONET links, with flexible signal routing. SONET's low latency, TDM functionality, and wide availability for optical networking implementations make it a useful protocol for this application. In other embodiments, IP routing is used. Routing protocols can be combined with traffic data to route signals as needed to optimize capacity between a group of base stations 14 and remote antenna 12 nodes.

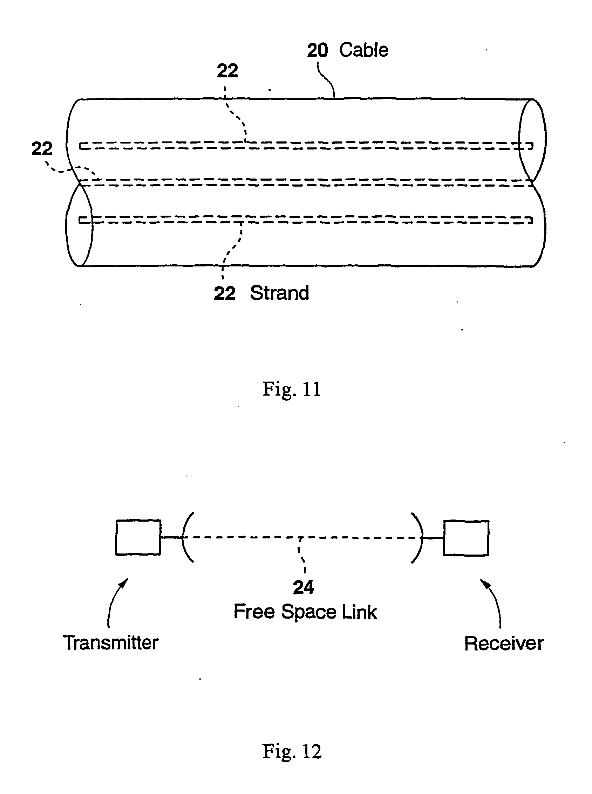

As noted earlier, network 10 can provide optical multiplexing. In this embodiment, the plurality of links 16 includes a plurality of optical fiber links. As illustrated in Figure 11, at least one fiber cable 20 can be included with a plurality of fiber strands 22 which form the multiple transmission paths. For example, a 192 count fiber cable could be used for 192 fiber strands, allowing 192 signals to be multiplexed on the cable with no other form of multiplexing. Clearly, multiple cables can be exploited in the same way as multiple strands. In another embodiment, at least one optical fiber strand 22 transmits at least two optical wavelengths that form multiple transmission paths. Preferably, all of the optical fiber strands 22 transmit more than one optical wavelength. As an example, 6 strands could carry 32 wavelengths each, providing 192 transmission paths. Beyond this, each path could have 4 signals multiplexed onto it employing TDM, providing 4 x 192 = 768 transmission paths.

Referring to Figure 12, in other embodiments, the plurality of links 16 is a plurality of free space optical links 24. In such links, one or more optical wavelengths are directed through free space. Such links are useful to employ in areas where fiber is expensive or unavailable. The plurality of links 16 can include both optical fibers and free space optical links 24.

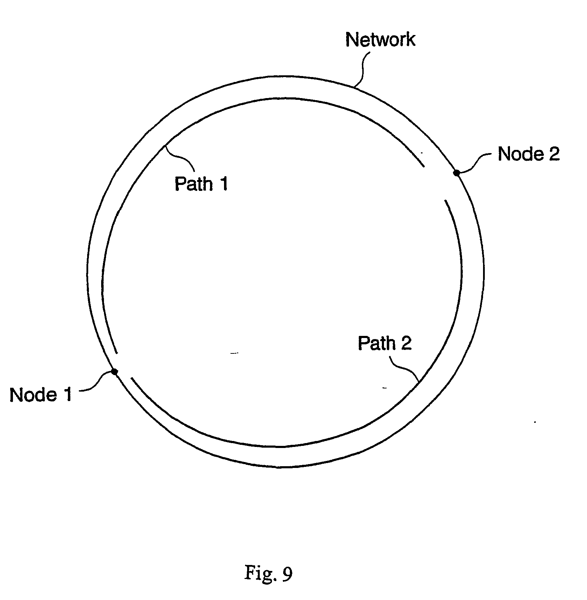

At least a portion of the plurality of links can be configured to provide selectable allocation of capacity to at least a portion of the plurality of base stations 14. This can be achieved with a control switching system 25. As illustrated in Figure 9, such a system functions like a switch, in which the RF traffic from the antennas 12 are directed into it, and then redirected into base station 14 transceivers as needed. The switch 25 also takes the downlink channels and distributes them back to the antennas 12. The switch 25 can dynamically allocate the channel capacity of a group of base station transceivers to antennas 12 as needed. The capacity redirection switch 25 can be coordinated with the RF channel allocation, in order that the same frequencies are not used adjacent to each other. The switch allows the base station transceiver capacity to serve the entire geographic region covered by the antennas 12.

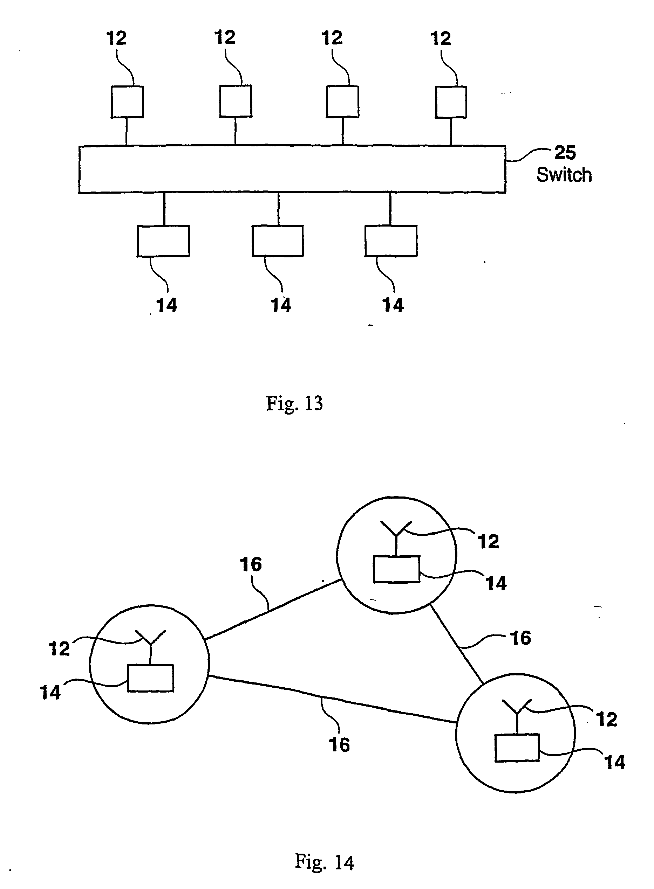

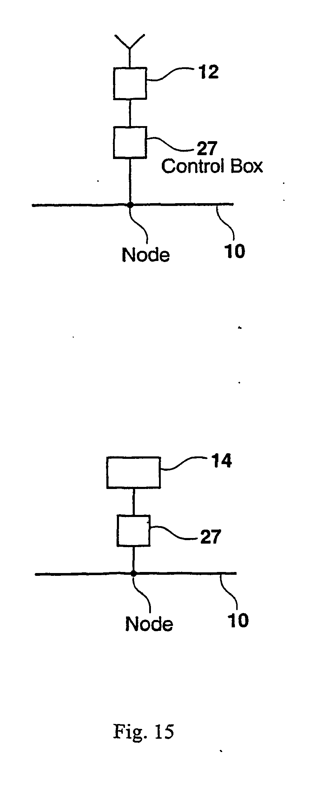

Referring to Figure 14, a special case of shared base station transceiver capacity is to connect multiple existing base station 14 sites together, in order that the antennas 12 at these sites can be served by the transceiver capacity of all the base stations 14. The statistics of pooling transceiver capacity to cover larger geographic areas allows fewer base stations 14 to be used than if they were individually connected to single antennas. In addition, populations moving within the larger geographic area are covered by the same transceiver pool, which allows the number of transceivers to be sized with the population, not the geographic coverage area. This reduces the number of base stations 14 required to cover a given geographic area. In another embodiment shown in Figure 15 a control box 27 can be included for each or a portion of the antennas 12 and provide routing to selected base stations 14. The routing by the control boxes 27 can be performed according to a desired schedule. For example, the switch could allocate more channels to highways during commute hours, and more channels to commercial office parks during business hours. One or all of the plurality of the links 16 can include a passive optical device 26. Suitable passive optical devices 26 include but are not limited to OADM's, filters, interleavers, multiplexers, and the like.

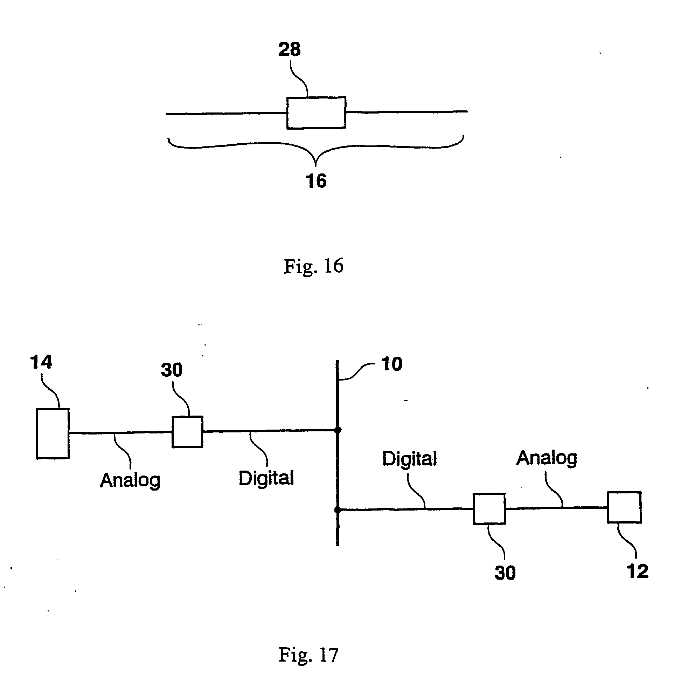

All of only a portion of the plurality of links 16 can include one or more optical amplifiers 28, Figure 16. Optical amplifiers 28 are low latency devices that amplify optical signals, overcoming optical losses from fiber and the use of optical components. Such amplifiers 28 are commercially available in configurations that amplify blocks of wavelengths, which makes DWDM optical networking more feasible, especially given the optical losses sustained in wavelength multiplexing.

The cellular signals exchanged over network 10 can be analog signals or digitized. Analog signals generally involve modulating a laser or optical modulator with the cellular RF signal, or a frequency converted version of this signal. Such implementations have the advantage of simplicity, and can take advantage of WDM, multiple fiber strands 22 on a given fiber cable 20, and FDM. However, for such transmission, the channel properties of the link 16, such as noise figure and spur-free dynamic range, directly impact the signal properties. DWDM networks experience linear and non-linear crosstalk, causing signal interference between different wavelength carriers. This can create problems with analog RF transmission. Digital signals are streams of bits, generated by digitally encoding the analog cellular signal. The analog cellular signal is the signal that would normally be transmitted or received by the base station or the remote mobile units. So a PCS CDMA signal could be an "analog cellular signal." It is not meant to imply that the signal is representative of an analog cellular standard. If the digital representation of the analog cellular signal is transmitted with a sufficient signal-to-noise ratio, it will not be significantly affected by link properties. Furthermore, these digital signals can be digitally protected with various strategies, such as encoding, parity, etc., to further reduce the likelihood of bit errors. By employing digital signals, there is a significant improvement in resistance to crosstalk. Hence DWDM and digital transmission is a powerful combination for exploiting the network 10 to carry the maximum number of cellular signals. Digital signals are furthermore amenable to the use of digital communications equipment and standards, such as routers, IP and SONET.

In one embodiment, the wavelength carriers carry an analog signal representative that is representative of an RF signal between multiple base stations 14 and antennas 12. Different carriers carry different cellular signals. In another embodiment, the wavelength carriers carry a digital signal that is representative of an RF signal between multiple base stations 14 and antennas 12. This digitization can be implemented in two preferred embodiments.

As illustrated in Figure 17, a digital transceiver 30 is embedded between the base station 14 and the network 10 on the base station 14 side, and between the antenna 12 and the network 10 at the antenna 12 side. The coupling can be either a direct connection, or through one or more RF components such as an amplifier, attenuator, gain control block, and the like. The analog cellular signal, which is normally exchanged between these two units, is first converted into a digital signal by the digital transceiver, which is then exchanged over the network 10. After the digital cellular signal is received at the other end of the network, it is reconstituted by the digital transceiver as an analog cellular signal. This signal can be filtered, amplified, attenuated, and the like before being transmitted to the antenna 12, or the base station 14.

The other embodiment is to integrate the digital component into the base station 14 unit and the antenna 12 unit, and not use a separate digital transceiver. Although this can involve digitizing a wireless channel or frequency band, a more sophisticated implementation is to separate the functionality of the base station 14 unit and the antenna 12 unit at a point where the signal is itself digital. Given that the cellular RF signal is a digitally modulated signal, the voice channel is digitized, and base stations 14 are migrating to a digital transmit/receive architecture, there are several intermediate digital signals that could be exchanged. The antenna 12 units, when serving as remote units, can provide conventional base station 14 functionality such as baseband coding, channel coding, modulation/demodulation, channel filtering, band filtering and transmission reception and the like.

The general case is that each antenna 12 location can be configured to receive a downlink cellular signal as a digital stream input that is representative of a single or multiplicity of wireless channels or a segment of wireless spectrum. The antenna 12 then reconstructs and transmits the RF signal. Additionally, uplink cellular signals are received off-air at the antenna 12 that are representative of a single or a multiplicity of wireless channels from at least one mobile unit. At the antenna 12 node the uplink cellular signal is then converted into a single or plurality of bit streams. The bit streams are then transmitted over the network 10 to the base station 14 units. The base station 14 units receive this uplink digital signal and process it. Additionally, they transmit a downlink digital signal to the network 10.

When digital transceiver units are used to perform D/A and A/D functionality between antennas 12 and base stations 14, the analog signals can be frequency down converted before sampling and A/D conversion, and frequency up converted after D/A conversion. The digital signal can be serialized before transmission and converted back to a parallel signal after transmission. High bit rates, including but not limited to those greater than 500 Mbps, can be employed to create high dynamic range links for improved cellular performance.

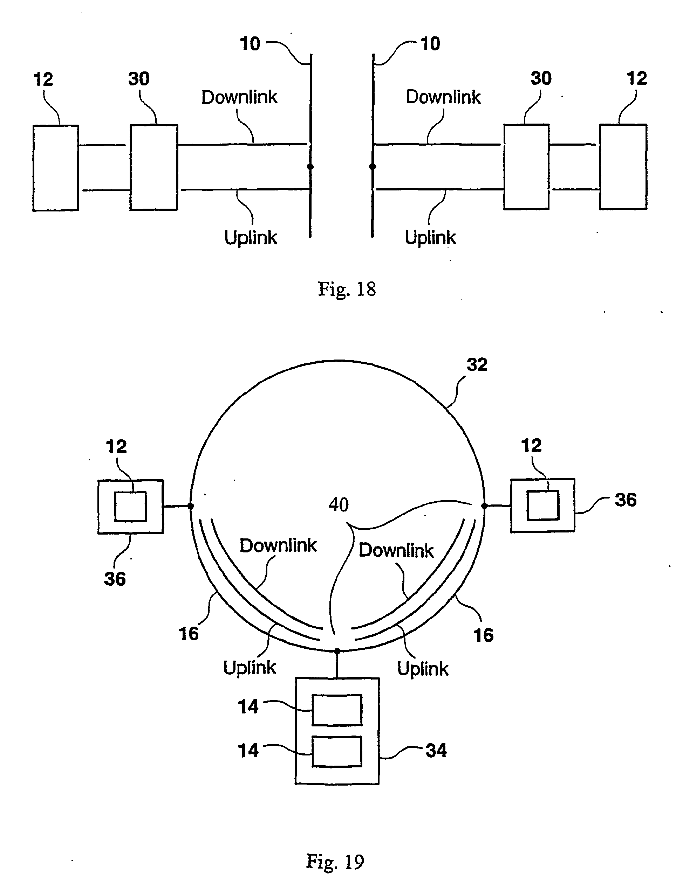

Referring to Figure 18, when digital transceivers are employed, at the base station, the digital transceivers 30 digitize the downlink analog cellular signals that are representative of a wireless spectrum band or channel. Thereafter, the digital transceivers 30 pass the downlink digital cellular signals to the network 10. For the uplink at the base station, the digital transceivers 30 receive uplink digital signals representative of a wireless spectrum band or channel from the network, reconstruct the analog cellular signals, and then pass them to the base stations 14. At the antennas 12, for the uplink, the analog cellular signals received on the antenna 12 from the mobile units are converted into digital signals, and transmitted onto the network 10. The downlink digital signals are received by digital transceivers at the antenna 12, and then converted back into analog cellular signals representative of a wireless spectrum band or channel, and passed to the antenna 12.

In various embodiments, network 10 can have different layouts. In one embodiment, at least a portion of the plurality of the links 16 are fixed optical paths. Such paths involve connecting one or more remote nodes to one or more base nodes and rarely dynamically re-routing this path. The optical paths between antennas 12 and base stations 14 can have a one-to-one correspondence, connecting to one antenna 12 node and one base station 14 unit, or alternatively, one or more antennas 12 can be connected to one or more base stations 14 in a non one-to-one embodiment. In another embodiment, the transmission paths of network 10 can be dynamic-routable optical paths flexibly routed between one or a plurality of base stations 14 and one or a plurality of antennas 12.

As illustrated in Figure 19, network 10 can be configured as a hub and spoke network 32. In this embodiment, the plurality of base stations 14 are located in a common node 34 and the plurality of antennas 12 are located at different remote nodes, generally denoted as 36 on the network 32. Optical uplink and downlink connections are spokes 38 that connect the common node 34 and the remote nodes 36. Network 32 can also include at least one set of nodes 40 containing the base stations 14 and/or antennas 12 which are connected by one or more links 16 that are laid out on a segment or a ring. Whether on a segment or a ring, in a preferred implementation the uplink and downlink should be transmitted in opposite directions to equalize the latency, which is important in cellular transmission.

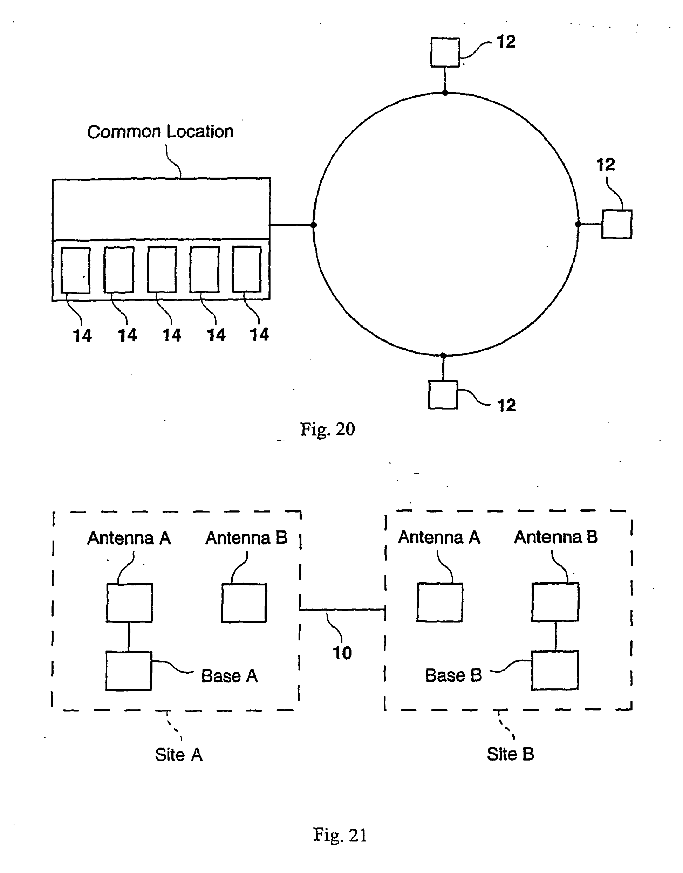

In one embodiment, at least two of the base stations 14 are located in a common location and the antennas 12 are geographically dispersed, Figure 20. Suitable common locations include but are not limited to an environmentally controlled room in a building connected to the network 10. The antennas 12 are placed in areas providing the desired coverage which may have higher real estate costs and/or lower available footprints than the common location, but which can be connected to the network 10.

In various embodiments, at least one link of the plurality of links 16 can be, shared by at least two operators. The operators can be wireless operators, different spectrum bands used by a same cellular operator, different entities. This different operators need not share electrical components when using an optical network. Different operators can be multiplexed onto the network using any of the multiplex methods detailed previously. In a preferred implementation, the different operators can use different optical fibers strands, or different optical wavelengths on the same fiber strand. In another preferred implementation, different operators can employ different wavelengths on free space links. By optically multiplexing multiple operators on the same network 10, the operators can share the costs of constructing, acquiring and maintaining the network 10 without compromising their electrical isolation requirements. In one embodiment, the network 10 can be used to connect together existing base station 14 sites for different operators, and used to extend coverage from one operator to all other operators.

For example, as illustrated in Figure 21, a site built by operator A at site A is connected to a site built by operator B at site B. An antenna 12 for A is placed at site B, connected to a base station 14 for operator A at site A, and an antenna 12 for operator B is placed at site A, connected to a base station 14 for operator B at site B.

In various embodiments, the links 16 provide that at least one optical carrier carries at least one backhaul signal from a base station 14 to a switch (such as an MTSO) or a bridge network. In an RF network, where the links 16 are RF links, the links 16 can be configured to provide that at least one RF carrier carries at least one backhaul signal from a base station 14 to one of a switch (such as an MTSO) or a bridge network.

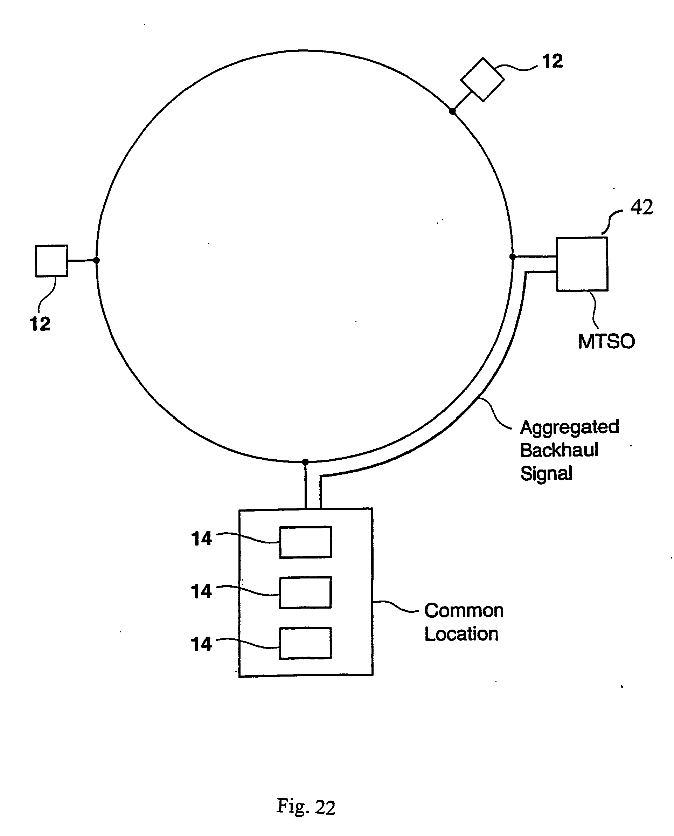

Referring now to Figure 22, network 10 can be an optical network that directly connects to a switch 42, including but not limited to an MTSO. Multiple backhaul signals from several base stations can be integrated into one higher bit rate backhaul signal. This allows the network 10 costs to be shared amongst backhaul signals as well, and allows for high bandwidth backhaul to be performed, which is cheaper per bit. The backhaul signals can be digital t-carriers, SONET signals, and the like. Non-backhaul RF signals that share the network 10 with the backhaul signal can be represented digitally to minimize the effects of crosstalk with the digital backhaul signal. Non-backhaul RF signals can have a large wavelength separation from the backhaul signal in order to minimize the effects of crosstalk with the digital backhaul signal.

Some antenna 12 or base station 14 locations are difficult to connect to a network, especially an optical fiber network, because no fiber may exist to the site. In an embodiment of the invention, such a location can be connected to the network 10 with a free space link, either a free space optical link 16 or microwave link 16. This link 16 can be analog or digital, and if digital can be formatted in a proprietary fashion, or as a T-carrier or SONET link.

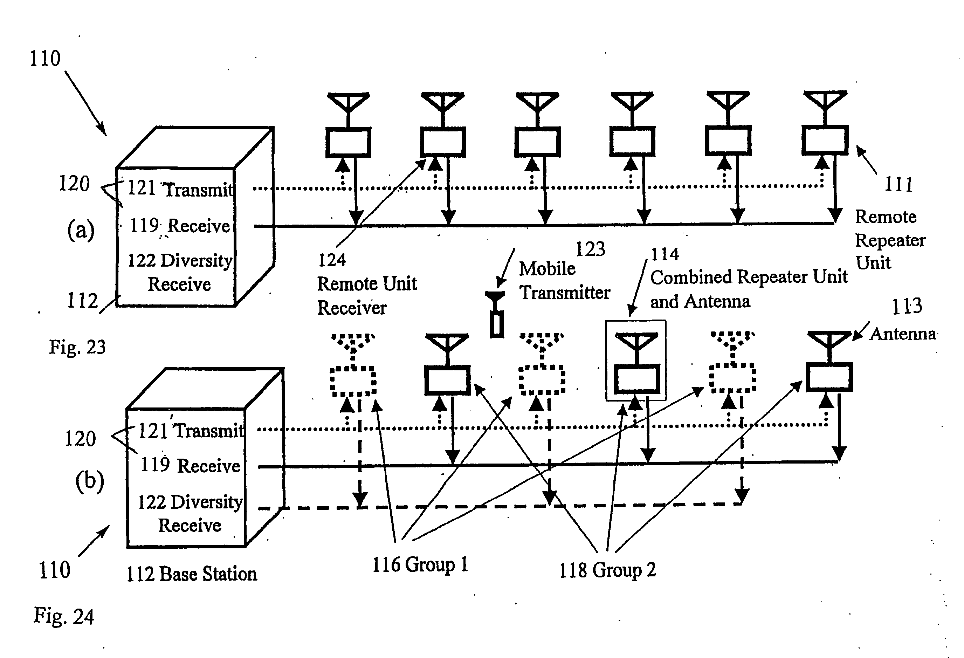

In another embodiment of the present invention, illustrated in Figure 23, a distributed antenna system 110 utilizes diversity receive and has one or more base stations 112. Each base station 112 is connected to multiple remote repeater units 111 and their corresponding antennas 113, with the combined assembly being object 114. It will be appreciated that the combined assembly 114 can have more than one antenna 113. The downlink RF signal is power divided into multiple signals, and then distributed to individual remote repeater units 111 and their corresponding antennas 113. The uplink RF signals from multiple remote units 114 are power combined. Remote units 114 are split into two or more groups 116 and 118 for each base station 112. Each base station 112 has a simplex receive port 119 or duplex transmit/receive port 120. It also has one or more diversity receive ports 122. Each remote repeater unit 112 in both groups 116 and 118 is connected to one downlink port, either simplex transmit port 121 or duplex transmit/receive port 120. However, only one of the groups 116 or 118 is coupled to the uplink receive port 119 or transmit/receive port 120 and the other group 116 or 118 is coupled to diversity receive port 122. It will be appreciated that this grouping can be extended to more than one diversity receive port 122. The division and placement of remote repeater unit assemblies 114 into groups 116 and 118 is chosen in order to maximize the potential for diversity receive. The number of groupings of remote repeater units assemblies 114 is equal in number to the total number of receive ports on a base station 112, either simplex receive port 119 or transmit/receive port 120, and then the diversity receive port or ports 122.

This embodiment can be utilized an any distributed antenna system, including but not limited to in-building applications, distributions of antennas 113 in a linear and non-linear arrangement and the like. By way of illustration, and without limitation, a linear coverage area, such as a road, can be covered by a series of remote repeater units 111 with their corresponding antennas 113, the combined assembly 114 placed on poles, at a spacing governed by the location of the poles and the coverage area of antennas 113. All of the poles along a segment are connected to the same base station 112.

As illustrated in Figure 24, each remote repeater unit receiver 124 on an alternate pole is placed into one of two groups 116 or 118. Each group 116 and 118 is power combined and connected to a different receive port. One group is connected to simplex receive port 119 or transmit/receive port 120, one of which will be present in a given base station 112. The other group is connected to diversity receive port 122. A mobile transmitter 123 between the poles that transmits an uplink signal has its signal received by both poles and is correctly discriminated by the receive/diversity receive on the base station 112. This can be extended to more than two groups if more receive or transmit/receive ports are available. When the distributed coverage is not arranged in a linear manner, coverage locations that are adjacent to one another are placed in the two or more different groups 116 and 118. Preferably, coverage areas are arranged into groups to increase the likelihood that a mobile transmission from a given location will be received by the two different receive ports, one by the receive port 119 or the transmit/receive port 120, and the other by the diversity receive port 122. Therefore, the members of groups 116 and 118 are chosen so that, as much as possible, geographically adjacent coverage areas are placed into different groups. Groups 116 and 118 are then coupled and combined. One into the receive port 119 or transmit/receive port 122, depending on the base station configuration, and the other into the diversity receive port 122.

In this embodiment of the present invention, the effects of Raleigh fade are significantly reduced. Raleigh fade can result from multipath which can occur as the signal travels from mobile transmitter 123 through the air to an antenna 113, or, in a distributed antenna system, due to the combination of signals from multiple antennas 113. This embodiment of the present invention provides two separate receive signals on two different receivers, and it is less likely for a null to occur at the location of both antennas 113 because two adjacent poles have different receive paths. By way of illustration, and without limitation, ∼3 dB SNR can be gained from the multiple signal path reception of this embodiment

Another benefit of this embodiment is that the number of remote repeater units 114 that are power combined on the uplink is divided by the total number of receive ports, comprised of a simplex receive port 119 or transmit/receive port 120, and one or more diversity receive ports 122. This total number is typically two. Because power combination reduces the signal while maintaining the same noise, proportional to the number of signals that are power combined, power combining half the distributed remote repeater units 114 on the uplink yields a 3dB improvement in uplink signal-to-noise ratio using two receive ports versus combining all the distributed remote repeater units 114 into a single receive port 119 or single transmit/receive port 120. Greater improvements result from more receive ports. This is particularly suitable for fiber fed systems because fiber link noise figure can make the link uplink limited. In the repeater systems that are used to implement this type of base station link, the link budget, meaning the coverage area, can often be determined by the uplink noise figure, not the downlink transmit power. However, in any power combined system, this improvement can be realized. By splitting the uplinks into multiple groups 116 and 118, and coupling them into simplex receive port 119 or duplex transmit/receive port 120 and diversity receive ports 122, the performance of system 110 is improved.

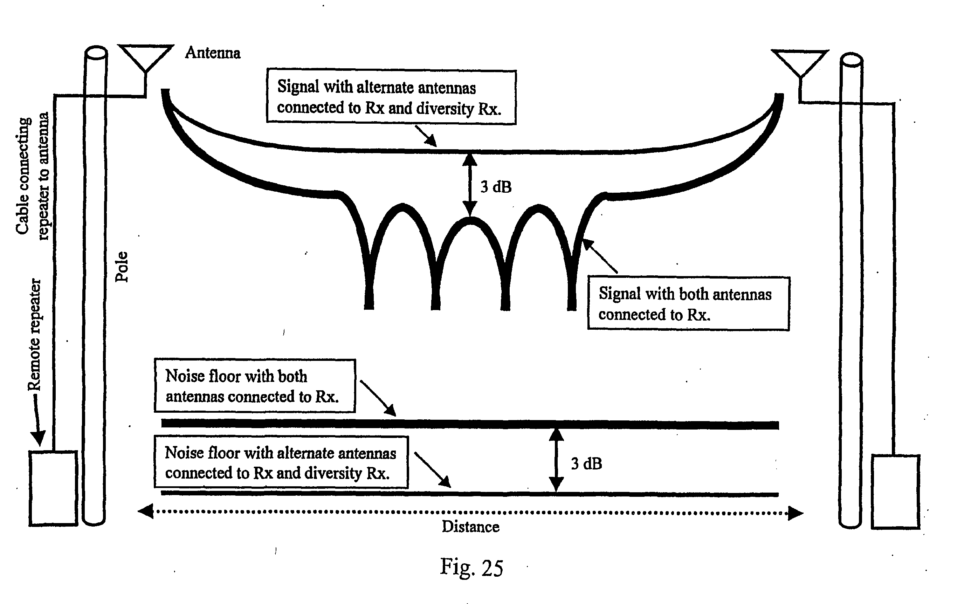

The improvement in uplink Raleigh fade, potential improvement in uplink signal, and decrease in uplink noise floor are illustrated in Figure 25. As shown in Figure 25, receive signal no longer experiences extensive Raleigh fading from being the power combined sum of the receive signals from both remote repeater units 114, and is 3 dB higher in the center between the poles, assuming the BTS has multiple receive-paths for each receive port, so it-can combine the demodulated signals. In addition, the noise floor drops by 3 dB as the number of poles that are power combined is divided by two.

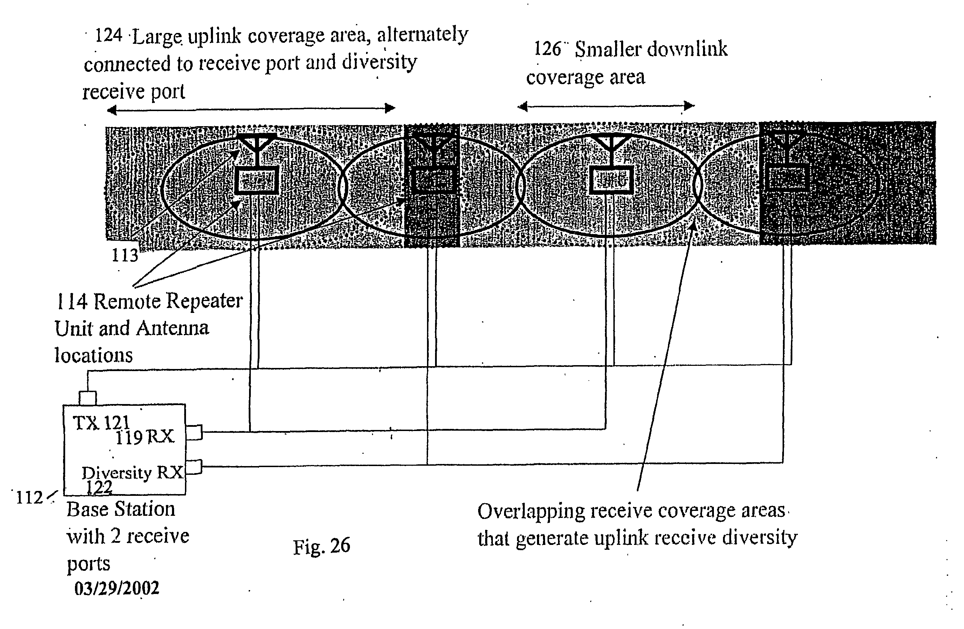

In certain circumstances, coverage situations can exist in a distributed antenna system in which the coverage areas are downlink limited, not uplink limited. Such a situation is illustrated in Figure 26. In such an area, the uplink coverage area 124 is larger than the downlink coverage area 126. In various embodiments, the present invention places the remote repeater units 111 with their corresponding antennas 113 such that the uplink coverage areas are overlapping, even if the downlink coverage areas are not overlapped. Multiple remote repeater units 114 can receive the same uplink signal, and so they can be coupled to the base station 112 to take advantage of the invention. With two receive ports, remote repeater units 114 are placed into two different groups 116 and 118 to maximize the opportunity for diversity uplink reception, and then one group is power combined and connected to the simplex receive port 119 or duplex transmit/receive port 120 and the other group is power combined and connected to diversity receive port 122. This can be extended to as many groups as the base station 112 has total receive ports.

## Claims

1. A network, comprising:
a plurality of base stations (14) of different operators in a common location, and configured to provide cellular transmission;
a plurality of geographically dispersed antennas (12);
a plurality of optical links (16) by which the plurality of antennas are coupled to the plurality of base stations;
**characterized in that**:
at least one optical link (18) of the plurality of optical links which is between at least one of the base stations and at least one of the antennas comprises multiple optical transmission paths; and
each optical transmission path of the multiple optical transmission paths is adapted to carry a signal representative of a respective segment of the wireless spectrum that is associated with a respective operator, so that the at least one optical link is shared by at least two of the operators.

2. The network of claim 1, wherein:
at least a portion of the plurality of optical links are configured to provide selectable allocation of capacity to at least a portion of the plurality of base stations.

3. The network of any one of the preceding claims, further comprising:
a control switching system (25) configured to provide selectable allocation of capacity to at least a portion of the plurality of base stations.

4. The network of any one of the preceding claims, further comprising:
low latency passive or switching components (18, 20, 24) which are adapted to perform optical multiplexing and routing in the network.

5. The network of any one of the preceding claims, wherein:
each optical transmission path of the multiple optical transmission paths comprises a different optical carrier.

6. The network of any one of claims 1 to 4; wherein:
each optical transmission path of the multiple optical transmission paths comprises a different-optical fiber.

7. The network of-any one of claims 1 to 4, wherein:
each optical transmission path- of the multiple optical transmission paths comprises a different optical-wavelength.

8. The network of any one of claims 1 to 4, wherein:
the multiple optical transmission paths are provided using time division multiplexing.

9. The network of any one of claims 1 to 4, wherein:
the multiple optical transmission paths are provided using time division multiplexing and wavelength division multiplexing.

10. The network of any one of the preceding claims, wherein:
the multiple-optical transmission paths are provided between the at least one of the base stations-and multiple antennas of the plurality of geographically dispersed antennas.

11. The network of any one of the preceding-claims, wherein:
the plurality of optical links comprises at least one free space optical link (24).

12. The network of any one of the preceding claims, wherein:
the plurality of optical links are provided in a ring topology.

13. The network of any one of the preceding claims, further comprising:
a control switching system (25) which is adapted to dynamically allocate a channel capacity of the base stations to the antennas.

14. The network of any one of claims 1 to 4 or claims 10 to 13, wherein:
the multiple optical transmission paths are- fixed optical paths which are rerouted on a time scale much slower than that of a bit rate over the at least one optical link.

15. The network of any one of the preceding claims, wherein:
the network is configured as a hub and spoke network, the plurality of base stations are located in a common node, and the plurality of antennas are located at different remote nodes on the network.

16. The network of any one of the preceding claims, wherein:
the multiple optical transmission paths are dynamically routable optical paths.

17. The network of any one of the preceding claims, further comprising:
a control box (27) for each antenna which is adapted to route signals from the antennas to selected ones of the base stations.

18. The network of any one of claims 1 to 16, further comprising:
a control box (27) for each antenna which is adapted to route signals from the antennas to selected ones of the base stations according to a desired schedule.

19. The network of any one of the preceding claims, further comprising:
at least one additional optical link which is adapted to carry at least one backhaul signal from at least one of the base stations to a switch or a bridge network.

20. The network of any one of claims 1 to 18, further comprising:
at least one additional optical link which is adapted to carry backhaul signals from the plurality of base stations to a switch or a bridge network.

21. The network of claim 20, wherein:
backhaul signals of the plurality of base stations are aggregated into a single higher bit rate backhaul signal carried by the switch or a bridge network.

22. The network of claim 21, wherein:
non-backhaul signals representative of a segment of wireless spectrum have a large wavelength separation from the backhaul signals-to minimize the effects of cross talk with the backhaul signals.

23. A method for communicating in a network, comprising:
providing a plurality of base stations (14) of different operators-in a common location;
configuring the plurality of base stations-to provide cellular transmission;
providing a plurality of geographically dispersed antennas (12);
coupling the plurality of antennas to the plurality of base stations via a plurality of optical links (16);
**characterized in that**:
at least one optical link (18) of the plurality of optical links which is between at least one of the base stations and at least one of the antennas comprises multiple optical transmission paths; and
each optical transmission path of the multiple optical transmission paths carries a signal representative of a respective segment of the wireless spectrum that is associated with a respective operator, so that the at least one optical link is shared by at least two of the operators.

24. The method of claim 23, further comprising:
configuring at least a portion of the plurality of optical links to provide selectable allocation of capacity to at least a portion of the plurality of base stations.

25. The method of claims 23 or 24, further comprising:
providing selectable allocation of capacity to at least a portion of the plurality of base stations.

26. The method of any one of claims 23 to 25, further comprising:
performing low latency optical multiplexing and routing in the network.

27. The method of any one of claims 23 to 26, further comprising:
providing a different optical carrier for each optical transmission path of the multiple optical transmission paths.

28. The method of any one of claims 23 to 26, further comprising:
providing a different optical fiber for each optical transmission path of the multiple optical transmission paths.

29. The method of any one of claims 23 to 26, wherein:
each optical transmission path of the multiple optical transmission paths comprises a different optical wavelength.

30. The method of any one of claims 23 to 26, further comprising:
using time division multiplexing to provide the multiple optical transmission paths.

31. The method of any one of claims 23 to 26, further comprising:
using time division multiplexing and wavelength division multiplexing to provide the multiple optical transmission paths.

32. The method of any one of claims 23 to 31, further comprising:
providing the multiple optical transmission paths between the at least one of the base stations and multiple antennas of the plurality of geographically dispersed antennas.

33. The method of any one of claims 23 to 32, wherein:
the plurality of optical links comprises at least one free space optical link.

34. The method of any one of claims 23 to 33, further comprising:
providing the plurality of optical links in a ring topology.

35. The method of any one of claims 23 to 34, further comprising:
dynamically allocating a channel capacity of the base stations to the antennas.

36. The method of any one of claims 23 to 26 and claims 32 to 35, wherein:
the multiple optical transmission paths are fixed optical paths, the method further comprising rerouting the multiple optical transmission paths on a time scale much slower than that of a bit rate over the at least one optical link.

37. The method of any one of claims 23 to 36, further comprising:
configuring the network as a hub and spoke network in which the plurality of base stations are located in a common node at the hub and the plurality of antennas are located at different remote nodes on the network along the spokes.

38. The method of any one of claims 23 to 37, further comprising:
dynamically routing the multiple optical transmission paths.

39. The method of any one of claims 23 to 38, further comprising:
routing signals from the antennas to selected ones of the base stations.

40. The method of any one of claims 23 to 38, further comprising:
routing signals from the antennas to selected ones of the base stations according to a desired schedule.

41. The method of any one of claims 23 to 40, further comprising:
carrying at least one backhaul signal from at least one of the base stations to a switch or a bridge network via at least one additional optical link.

42. The method of any one of claims 23 to 40, further comprising:
carrying backhaul signals from the plurality of base stations to a switch or a bridge network via at least one additional optical link.

43. The method of claim 42, further comprising:
aggregating backhaul signals of the plurality of base stations into a single higher bit rate backhaul signal which is carried by the switch or a bridge network.

44. The method of claim 43, further comprising:
providing non-backhaul signals representative of a segment of wireless spectrum with a large wavelength separation from the backhaul signals to minimize the effects of cross talk with the backhaul signals.

## Patentansprüche

1. Netzwerk, das aufweist:
eine Mehrzahl von Basisstationen (14) von unterschiedlichen Operatoren in einem gemeinsamen Ort und konfiguriert, um eine mobile Übertragung bereitzustellen,
eine Mehrzahl von geographisch verteilten Antennen (12),
eine Mehrzahl von optischen Verbindungen (16), durch die die Mehzahl von Antennen mit der Mehrzahl von Basisstationen verbunden sind,
**dadurch gekennzeichnet, dass**:
zumindest eine optische Verbindung (18) der Mehrzahl von optischen Verbindungen, die zwischen zumindest einer der Basisstationen und zumindest einer der Antennen besteht, mehrere optische Übertragungspfade aufweist, und
jeder optische Übertragungspfad der mehreren optischen Übertragungspfade angepaßt ist, um ein Signal zu tragen, das eine entsprechendes Segment des Funkspektrums repräsentiert, welches mit einem entsprechenden Operator verknüpft ist, so dass die zumundest eine optische Verbindung von zumindest zweien der Operatoren gemeinsam genutzt wird.

2. Netzwerk nach Anspruch 1, bei dem:
zumindest ein Teil der Mehrzahl von optischen Verbindungen konfiguriert ist, um eine auswählbare Zuweisung der Kapazität zu zumindest einem Teil der Mehrzahl von Basisstationen bereitzustellen.

3. Netzwerk nach einem der vorherigen Ansprüche, das weiterhin aufweist:
ein Steuerschaltsystem (25), welches konfiguriert ist, um eine auswählbare Zuweisung der Kapazität zu zumindest einem Teil der Mehrzahl von Basisstationen bereitzustellen.

4. Netzwerk nach einem der vorherigen Ansprüche, das weiterhin aufweist:
low latency passive Komponenten oder Schaltkomponenten (18, 20, 24), die angepasst sind, um ein optisches Multiplexen und Weiterleiten im Netzwerk durchzuführen.

5. Netzwerk nach einem der vorherigen Ansprüche, bei dem:
jeder optische Übertragungspfad der mehreren optischen Übertragungspfade einen anderen optischen Träger aufweist.

6. Netzwerk nach einem der Ansprüche 1 bis 4, bei dem:
jeder optische Übertragungspfad der mehreren optischen Übertragungspfade eine andere optische Faser aufweist.

7. Netzwerk nach einem der Ansprüche 1 bis 4, bei dem:
jeder optische Übertragungspfad der mehreren optischen Übertragungspfade eine andere optische Wellenlänge aufweist.

8. Netzwerk nach einem der Ansprüche 1 bis 4, bei dem:
die mehreren optischen Übertragungspfade bereitgestellt werden unter Verwendung des Zeit-Duplex-Verfahrens.

9. Netzwerk nach einem der Ansprüche 1 bis 4, bei dem:
die mehreren optischen Übertragungspfade bereitgestellt werden unter Verwendung des Zeit-Duplex Verfahrens und des Wellenlängen-Duplex Verfahrens.

10. Netzwerk nach einem der vorherigen Ansprüche, bei dem:
die mehreren optischen Übertragungspfade zwischen der zumindest einen Basisstation und mehreren Antennen der Mehrzahl von geographisch verteilten Antennen bereitgestellt werden.

11. Netzwerk nach einem der vorherigen Ansprüche, in dem:
die Mehrzahl von optischen Verbindungen zumindest eine optische Richtfunk bzw. optische Freiraum Datenübertragungsverbindung (24) aufweist.

12. Netzwerk nach einem der vorherigen Ansprüche, bei dem:
die Mehrzahl von optischen Verbindungen in einer Ringtopologie bereitgestellt werden.

13. Netzwerk nach einem der vorherigen Ansprüche, das weiterhin aufweist:
ein Steuerschaltsystem (25), welches angepasst ist, um dynamisch eine Kanalkapazität der Basisstationen den Antennen zuzuweisen.

14. Netzwerk nach einem der Ansprüche 1 bis 4 oder einem der Ansprüche 10 bis 13, bei dem:
die mehreren optischen Übertragungspfade fest optische Pfade sind, die auf einer Zeitskala viel langsamer als die Bitrate über zumindest eine optische Verbindung zurückgeleitet werden.

15. Netzwerk nach einem der vorherigen Ansprüche, bei dem:
das Netzwerk als ein Speichenarchitektur-Netzwerk konfiguriert ist, wobei die Mehrzahl von Basisstationen in einem gemeinsamen Knoten lokalisiert sind und die Mehrzahl von Antennen an unterschiedlichen entfernten Knoten des Netzwerkes lokalisiert sind.

16. Netzwerk nach einem der vorherigen Ansprüche, bei dem:
die mehreren optischen Übertragungspfade dynamisch weiterleitbare optische Pfade sind.

17. Netzwerk nach einem der vorherigen Ansprüche, das weiterhin aufweist:
eine Steuerbox (27) für jede Antenne, die angepasst ist, um Signale von den Antennen zu ausgewählten Basisstationen zu leiten.

18. Netzwerk nach einem der Ansprüche 1 bis 16, das weiterhin aufweist:
eine Steuerbox (27) für jede Antenne, die angepasst ist, um Signale von den Antennen zu ausgewählten Basisstationen gemäß einem gewünschten Plan zu leiten.

19. Netzwerk nach einem der vorherigen Ansprüche, das weiterhin aufweist:
zumindest eine zusätzliche optische Verbindung, die angepasst ist, um zumindest ein Backhauf-Signal von zumindest einer der Basisstationen zu einem Schalter oder einem Brückennetzwerk zu tragen.

20. Netzwerk nach einem der Ansprüche 1 bis 18, das weiterhin aufweist:
zumindest eine zusätzliche optische Verbindung, die angepasst ist, um Bakhaul-Signale von der Mehrzahl von Basisstationen zu einem Schalter oder einem Brückennetzwerk zu tragen.

21. Netzwerk nach Anspruch 20, bei dem:
Backhaul-Signale der Mehrzahl von Basisstationen in ein einzelnes Backhaus-Signal mit höherer Bitrate, welches von dem Schalter oder einem Brückennetzwerk getragen wird, vereinigt werden.

22. Netzwerk nach Anspruch 21, bei dem:
Nicht-Backhaul-Signale, die ein Segment des Funkspektrums mit einer großen Wellenlängentrennung von den Backhaul-Signalen repräsentieren, um den Effekt des Übersprechens mit den Backhaul-Signalen zu minimieren.

23. Verfahren für das Kommunizieren in einem Netzwerk, das aufweist:
Bereitstellen einer Mehrzahl von Basisstationen (14) von unterschiedlichen Operatoren an einem gemeinsamen Ort,
Konfigurieren der Mehrzahl von Basisstationen, um eine mobile Übertragung bereitzustellen,
Bereitstellen einer Mehrzahl von geographisch verteilten Antennen (12), Verbinden der Mehrzahl von Antennen mit der Mehrzahl von Basisstationen über eine Mehrzahl von optischen Verbindungen (16),
**gekennzeichnet durch**:
zumindest eine optische Verbindung (18) der Mehrzahl von optischen Verbindungen, die zwischen zumindest einer der Basisstationen und zumindest einer der Antennen besteht, die mehrere optische Übertragungspfade aufweist, und wobei
jeder optische Übertragungspfad der mehreren optischen Übertragungspfade ein Signal trägt, das ein entsprechendes Segment des Funkspektrums repräsentiert, das mit einem entsprechenden Operator verknüpft ist, so dass die zumindest eine optische Verbindung von zumindest zwei der Operatoren gemeinsam verwendet wird.

24. Verfahren nach Anspruch 23, das weiterhin aufweist:
Konfigurieren von zumindest einem Teil der Mehrzahl von optischen Verbindungen, um eine auswählbare Zuweisung der Kapazität zu zumindest einem Teil der Mehrzahl von Basisstationen bereitzustellen.

25. Verfahren nach den Ansprüchen 23 oder 24, das weiterhin aufweist:
Bereitstellen einer auswählbaren Zuweisung der Kapazität zu zumindest einem Teil der Mehrzahl von Basisstationen.

26. Verfahren nach einem der Ansprüche 23 bis 25, das weiterhin aufweist:
Durchführen von low-latency optischem Multiplexing und Routing in dem Netzwerk.

27. Verfahren nach einem der Ansprüche 23 bis 26, das weiterhin aufweist:
Bereitstellen eines anderen optischen Trägers für jeden optischen Übertragungspfad der mehreren optischen Übertragungspfade.

28. Verfahren nach einem der Ansprüche 23 bis 26, das weiterhin aufweist:
Bereitstellen einer anderen optischen Faser für jeden optischen Übertragungspfad der mehreren optischen Übertragungspfade.

29. Verfahren nach einem der Ansprüche 23 bis 26, bei dem:
jeder optische Übertragungspfad der mehreren optischen Übertragungspfade eine andere optische Wellenlänge aufweist.

30. Verfahren nach einem der Ansprüche 23 bis 26, das weiterhin aufweist:
die Verwendung des Zeit-Duplex-Verfahrens, um die mehreren optischen Übertragungspfade bereitzustellen.

31. Verfahren nach einem der Ansprüche 23 bis 26, das weiterhin aufweist:
die Verwendung des Zeit-Duplex-Verfahrens und des Wellenlängen-Duplex-Verfahrens, um die mehreren optischen Übertragungspfade bereitzustellen.

32. Verfahren nach einem der Ansprüche 23 bis 31, das weiterhin aufweist:
Bereitstellen der mehreren optischen Übertragungspfade zwischen der zumindest einen der Basisstationen und mehreren Antennen der Mehrzahl von geographisch verteilten Antennen.

33. Verfahren nach einem der Ansprüche 23 bis 32, bei dem:
die Mehrzahl von optischen Verbindungen zumindest eine optische Richtfunkverbindung aufweist.

34. Verfahren nach einem der Ansprüche 23 bis 33, das weiterhin aufweist:
Bereitstellen der Mehrzahl von optischen Verbindungen in einer Ringtopologie.

35. Verfahren nach einem der Ansprüche 23 bis 34, das weiterhin aufweist:
dynamisches Zuweisen einer Kanalkapazität der Basisstationen zu den Antennen.

36. Verfahren nach einem der Ansprüche 23 bis 26 und einem der Ansprüche 32 bis 35, bei dem:
die mehreren optischen Übertragungspfade feste optische Pfade sind, wobei das Verfahren weiterhin aufweist das Zurückleiten der mehreren optischen Übertragungspfade auf einer Zeitskala viel langsamer als eine Bitrate über die zumindest eine optische Verbindung.

37. Verfahren nach einem der Ansprüche 23 bis 36, das weiterhin aufweist:
Konfigurierten des Netzwerkes als Speichenarchitekturnetzwerk, in dem die Mehrzahl von Basisstationen in einem gemeinsamen Knoten der Nabe lokalisiert sind und die Mehrzahl von Antennen entlang der Speichen an unterschiedlichen entfernten Knoten im Netzwerk lokalisiert sind.

38. Verfahren nach einem der Ansprüche 23 bis 37, das weiterhin aufweist:
dynamisches Weiterleiten der mehreren optischen Übertragungspfade.

39. Verfahren nach einem der Ansprüche 23 bis 38, das weiterhin aufweist:
das Routing von Signalen von den Antennen zu ausgewählten der Basisstationen.

40. Verfahren nach einem der Ansprüche 23 bis 38, das weiterhin aufweist:
das Routing von Signalen von den Antennen zu ausgewählten Basisstationen entsprechend einem gewünschten Plan.

41. Verfahren nach einem der Ansprüche 23 bis 40, das weiterhin aufweist:
Tragen von zumindest einem Backhaul-Signal von zumindest einer der Basisstationen zu einem Schalt- oder einem Brückennetzwerk über die zumindest eine zusätzliche optische Verbindung.

42. Verfahren nach einem der Ansprüche 23 bis 40, das weiterhin aufweist:
das Tragen von Backhaul-Signalen von der Mehrzahl von Basisstationen zu einem Schalt- oder einem Brückennetzwerk über zumindest eine zusätzliche optische Verindung.

43. Verfahren nach Anspruch 42, das weiterhin aufweist:
Vereinigen von Backhaul-Signalen der Mehrzahl von Basisstationen in ein einzelnes Backhaul-Signal höherer Bitrate, das von dem Schalt- oder einem Brückennetzwerk getragen wird.

44. Verfahren nach Anspruch 43, das weiterhin aufweist:
Bereitstellen von Nicht-Backhaul-Signalen, die ein Segment eines Funkspektrums repräsentieren, mit einer großen Wellenlängentrennung von den Backhaul-Signalen, um die Effekte des Übersprechens mit den Backhaul-Signalen zu minimieren.

## Revendications

1. Réseau, comprenant :
une pluralité de stations de base (14) de différents opérateurs à un emplacement commun, et configurées pour fournir une transmission cellulaire ;
une pluralité d'antennes dispersées géographiquement (12) ;
une pluralité de liaisons optiques (16) par lesquelles la pluralité d'antennes sont couplées à la pluralité de stations de base ;
**caractérisé en ce que** :
au moins une liaison optique (18) de la pluralité de liaisons optiques qui est entre au moins l'une des stations de base et au moins l'une des antennes comprend de multiples voies de transmission optiques ;et
chaque voie de transmission optique parmi les multiples voies de transmission optiques est apte à transporter un signal représentatif d'un segment respectif du spectre sans fil qui est associé à un opérateur respectif, de sorte que l'au moins une liaison optique soit partagée par au moins deux des opérateurs.

2. Réseau selon la revendication 1, dans lequel :
au moins une partie de la pluralité de liaisons optiques sont configurées pour fournir une allocation sélectionnable de capacité à au moins une partie de la pluralité de stations de base.

3. Réseau selon l'une quelconque des revendications précédentes, comprenant en outre :
un système de commutation de commande (25) configuré pour fournir une allocation sélectionnable de capacité à l'au moins une partie de la pluralité de stations de base.

4. Réseau selon l'une quelconque des revendications précédentes, comprenant en outre :
des composants de commutation ou passifs à faible latence (18, 20, 24) qui sont aptes à effectuer un multiplexage optique et un routage dans le réseau.

5. Réseau selon l'une quelconque des revendications précédentes, dans lequel :
chaque voie de transmission optique parmi les multiples voies de transmission optiques comprend une porteuse optique différente.

6. Réseau selon l'une quelconque des revendications 1 à 4, dans lequel :
chaque voie de transmission optique parmi les multiples voies de transmission optiques comprend une fibre optique différente.

7. Réseau selon l'une quelconque des revendications 1 à 4, dans lequel :
chaque voie de transmission optique parmi les multiples voies de transmission optiques comprend une longueur d'onde optique différente.

8. Réseau selon l'une quelconque des revendications 1 à 4, dans lequel :
les multiples voies de transmission optiques sont fournies en utilisant le multiplexage à division de temps.

9. Réseau selon l'une quelconque des revendications 1 à 4, dans lequel :
les multiples voies de transmission optiques sont fournies en utilisant le multiplexage à division de temps et le multiplexage à division de longueur d'onde.

10. Réseau selon l'une quelconque des revendications précédentes, dans lequel :
les multiples voies de transmission optiques sont fournies entre l'au moins une des stations de base et de multiples antennes de la pluralité d'antennes dispersées géographiquement.

11. Réseau selon l'une quelconque des revendications précédentes, dans lequel :
la pluralité de liaisons optiques comprennent au moins une liaison optique d'espace libre (24).

12. Réseau selon l'une quelconque des revendications précédentes, dans lequel :
la pluralité de liaisons optiques sont fournies dans une topologie en anneau.

13. Réseau selon l'une quelconque des revendications précédentes, comprenant en outre :
un système de commutation de commande (25) qui est apte à allouer dynamiquement une capacité de canal des stations de base aux antennes.

14. Réseau selon l'une quelconque des revendications 1 à 4 ou des revendications 10 à 13, dans lequel :
les multiples voies de transmission optiques sont des voies optiques fixes qui sont réacheminées sur une échelle de temps beaucoup plus lentement que celles d'un débit binaire sur l'au moins une liaison optique.

15. Réseau selon l'une quelconque des revendications précédentes, dans lequel :
le réseau est configuré sous forme de réseau en étoile, la pluralité de stations de base sont situées dans un noeud commun, et la pluralité d'antennes sont situées à différents noeuds distants sur le réseau.

16. Réseau selon l'une quelconque des revendications précédentes, dans lequel :
les multiples voies de transmission optiques sont des voies optiques pouvant être dynamiquement acheminées.

17. Réseau selon l'une quelconque des revendications précédentes, comprenant en outre :
un boîtier de commande (27) pour chaque antenne qui est apte à acheminer des signaux des antennes vers celles sélectionnées des stations de base.

18. Réseau selon l'une quelconque des revendications 1 à 16, comprenant en outre :
un boîtier de commande (27) pour chaque antenne qui est apte à acheminer des signaux des antennes vers celles sélectionnées des stations de base selon un planning souhaité.

19. Réseau selon l'une quelconque des revendications précédentes, comprenant en outre :
au moins une liaison optique supplémentaire qui est apte à transporter au moins un signal de liaison terrestre d'au moins l'une des stations de base à un commutateur ou un réseau de pont.

20. Réseau selon l'une quelconque des revendications 1 à 18, comprenant en outre :
au moins une liaison optique supplémentaire qui est apte à transporter des signaux de liaison terrestre de la pluralité de stations de base à un commutateur ou un réseau de pont.

21. Réseau selon la revendication 20, dans lequel :
les signaux de liaison terrestre de la pluralité de stations de base sont agrégés en un seul signal de liaison terrestre de débit binaire supérieur transporté par le commutateur ou un réseau de pont.

22. Réseau selon la revendication 21, dans lequel :
des signaux hors liaison terrestre représentatifs d'un segment du spectre sans fil ont une grande séparation de longueur d'onde par rapport aux signaux de liaison terrestre pour minimiser les effets de diaphonie avec les signaux de liaison terrestre.

23. Procédé pour communiquer dans un réseau, comprenant les étapes consistant à :
fournir une pluralité de stations de base (14) de différents opérateurs à un emplacement commun ;
configurer la pluralité de stations de base pour fournir une transmission cellulaire ; fournir une pluralité d'antennes dispersées géographiquement (12) ;
coupler la pluralité d'antennes à la pluralité de stations de base par le biais d'une pluralité de liaisons optiques (16) ;
**caractérisé en ce que** :
au moins une liaison optique (18) de la pluralité de liaisons optiques qui est entre au moins l'une des stations de base et au moins l'une des antennes comprend de multiples voies de transmission optiques ; et
chaque voie de transmission optique parmi les multiples voies de transmission optiques est apte à transporter un signal représentatif d'un segment respectif du spectre sans fil qui est associé à un opérateur respectif, de sorte que l'au moins une liaison optique soit partagée par au moins deux des opérateurs.

24. Procédé selon la revendication 23, comprenant en outre l'étape consistant à :
configurer au moins une partie de la pluralité de liaisons optiques pour fournir une allocation sélectionnable de capacité à au moins une partie de la pluralité de stations de base.

25. Procédé selon la revendication 23 ou 24, comprenant en outre l'étape consistant à :
fournir une allocation sélectionnable de capacité à l'au moins une partie de la pluralité de stations de base.

26. Procédé selon l'une quelconque des revendications 23 à 25, comprenant en outre l'étape consistant à :
effectuer un multiplexage optique de faible latence et un routage dans le réseau.

27. Procédé selon l'une quelconque des revendications 23 à 26, comprenant en outre l'étape consistant à :
fournir une porteuse optique différente pour chaque voie de transmission optique parmi les multiples voies de transmission optiques.

28. Procédé selon l'une quelconque des revendications 23 à 26, comprenant en outre l'étape consistant à :
fournir une fibre optique différente pour chaque voie de transmission optique parmi les multiples voies de transmission optiques.

29. Procédé selon l'une quelconque des revendications 23 à 26, dans lequel :
chaque voie de transmission optique parmi les multiples voies de transmission optiques comprend une longueur d'onde optique différente.

30. Procédé selon l'une quelconque des revendications 23 à 26, comprenant en outre l'étape consistant à :
utiliser le multiplexage à division de temps pour fournir les multiples voies de transmission optiques.

31. Procédé selon l'une quelconque des revendications 23 à 26, comprenant en outre l'étape consistant à :
utiliser le multiplexage à division de temps et le multiplexage à division de longueur d'onde pour fournir les multiples voies de transmission optiques.

32. Procédé selon l'une quelconque des revendications 23 à 31, comprenant en outre l'étape consistant à :
fournir les multiples voies de transmission optiques entre l'au moins une des stations de base et de multiples antennes de la pluralité d'antennes dispersées géographiquement.

33. Procédé selon l'une quelconque des revendications 23 à 32, dans lequel :
la pluralité de liaisons optiques comprennent au moins une liaison optique d'espace libre.

34. Procédé selon l'une quelconque des revendications 23 à 33, comprenant en outre l'étape consistant à :
fournir la pluralité de liaisons optiques dans une topologie en anneau.

35. Procédé selon l'une quelconque des revendications 23 à 34, comprenant en outre l'étape consistant à :
allouer dynamiquement une capacité de canal des stations de base aux antennes.

36. Procédé selon l'une quelconque des revendications 23 à 26 et des revendications 32 à 35, dans lequel :
les multiples voies de transmission optiques sont des voies optiques fixes, le procédé comprenant en outre l'étape consistant à réacheminer les multiples voies de transmission optiques sur une échelle de temps beaucoup plus lentement que celles d'un débit binaire sur l'au moins une liaison optique.

37. Procédé selon l'une quelconque des revendications 23 à 36, comprenant en outre l'étape consistant à :
configurer le réseau sous forme de réseau en étoile, dans lequel la pluralité de stations de base sont situées dans un noeud commun au centre et la pluralité d'antennes sont situées à différents noeuds distants le long des rayons.

38. Procédé selon l'une quelconque des revendications 23 à 37, comprenant en outre l'étape consistant à :
acheminer dynamiquement les multiples voies de transmission optiques.

39. Procédé selon l'une quelconque des revendications 23 à 38, comprenant en outre l'étape consistant à :
acheminer des signaux des antennes vers celles sélectionnées des stations de base.

40. Procédé selon l'une quelconque des revendications 23 à 38, comprenant en outre l'étape consistant à :
acheminer des signaux des antennes vers celles sélectionnées des stations de base selon un planning souhaité.

41. Procédé selon l'une quelconque des revendications 23 à 40, comprenant en outre l'étape consistant à :
transporter au moins un signal de liaison terrestre d'au moins l'une des stations de base à un commutateur ou un réseau de pont par le biais d'au moins une liaison optique supplémentaire.

42. Procédé selon l'une quelconque des revendications 23 à 40, comprenant en outre l'étape consistant à :
transporter des signaux de liaison terrestre de la pluralité de stations de base à un commutateur ou un réseau de pont par le biais d'au moins une liaison optique supplémentaire.

43. Procédé selon la revendication 42, comprenant en outre l'étape consistant à :
agréger des signaux de liaison terrestre de la pluralité de stations de base en un seul signal de liaison terrestre de débit binaire supérieur qui est transporté par le commutateur ou un réseau de pont.

44. Procédé selon la revendication 43, comprenant en outre l'étape consistant à :
fournir des signaux hors liaison terrestre représentatifs d'un segment du spectre sans fil avec une grande séparation de longueur d'onde par rapport aux signaux de liaison terrestre pour minimiser les effets de diaphonie avec les signaux de liaison terrestre.
